# FASCICULE DE BREVET EUROPEEN

(11) **EP 2 318 619 B1**
(45) Date de publication et mention de la délivrance du brevet: **01.02.2012**
(21) Numéro de dépôt: 09800068.0
(22) Date de dépôt: 23.07.2009
(51) Int. Cl.: E04H 4/08, E04H 4/10, E06B 9/58, A63C 19/12, B60J 7/08

(54) **DISPOSITIF DE COUVERTURE D'UNE SURFACE**
OBERFLÄCHENDECKENDE VORRICHTUNG
SURFACE COVERING DEVICE

(30) Priorité: 25.07.2008 BE 200800417
(43) Date de publication de la demande: 11.05.2011
(73) Titulaire: Becoflex S.A., 1440 Wauthier-Braine (BE)
(72) Inventeur: COENRAETS, Benoît, B-1440 Wauthier-Braine (BE)
(74) Mandataire: Pecher, Nicolas
(86) Numéro de dépôt international: PCT/EP2009/059504
(87) Numéro de publication internationale: WO 2010/010152

(56) Documents cités:
- DE-B- 1 038 731
- FR-A- 2 789 425
- FR-A- 2 803 769
- US-A- 5 950 253

## Description

### Domaine de l'invention

L'invention se rapporte à un dispositif de couverture d'une surface, aisé à mettre en oeuvre et répondant au mieux aux exigences de l'application concernée.

### Arrière-plan technologique

On applique des couvertures sur des surfaces pour des raisons qui dépendent de la nature de ces surfaces.

Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente.

Par ailleurs, une caisse de véhicule est couverte notamment pour assurer la stabilité de la charge à la dépression causée par le déplacement du véhicule et la protéger contre les intempéries.

On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, et nécessitant un minimum d'intervention humaine.

Un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US 6,691,334 , GB 2 379 163 et FR 2 652 373. Il est clair qu'ici compte tenu de la manutention et du stockage, seules des piscines d'assez petite taille sont concernées.

Pour des surfaces de plus grandes dimensions on peut recourir à des dispositifs de couverture présentant en outre un tambour fixé à l'une des extrémités transversales de la surface à protéger. La couverture est déployée manuellement par traction, en se déroulant du tambour, pour couvrir la surface. Le poids et les dimensions de la couverture nécessitent l'intervention de plusieurs personnes afin qu'elle se mette en place convenablement. On effectue le retrait de la couverture en l'enroulant autour du tambour par rotation : la couverture se retire alors de la surface en glissant sur celle-ci. La rotation du tambour pour retirer la couverture est réalisée manuellement ou au moyen d'un moteur électrique ayant la puissance suffisante pour tirer la couverture complètement déployée. Il faut souligner qu'un déploiement aisé de la couverture, en particulier dans le cas d'une piscine, contribue à sa sécurité, car une manipulation pénible entraverait son utilisation.

Dans la présente demande, les termes « longitudinal » « transversal » et leurs dérivés se réfèrent respectivement à la direction de déplacement du tambour et à la direction de l'axe de révolution de celui-ci.

Afin de supprimer l'intervention humaine des dispositifs (complètement) automatiques ont été proposés ; la couverture est enroulée autour d'un tambour motorisé permettant son retrait, le tambour étant fixé à l'une des extrémités transversales de la surface à protéger. La couverture est déployée en la tirant par son extrémité apparente avec des moyens de traction automatique de type crémaillère ou chaîne ou câble de traction avec ou sans poulie de renvoi, la couverture pouvant éventuellement être guidée par des glissières disposées sur les extrémités longitudinales de la surface à couvrir ; la couverture glisse alors sur la surface en la couvrant. De même, lors du retrait de la couverture, celle-ci glisse sur la surface à couvrir en s'enroulant autour du tambour. Ce dispositif de couverture automatique est illustré notamment dans les documents suivants : US 3,574,979, GB 2 199 741, US 2005/0097834, CA 2,115,113, US 2001/0023506, US 5,930,848, US 4,001,900 et et sur le site www.aquatop.be.

Les deux types de dispositifs de couverture à tambour évoqués ci-dessus ont pour inconvénient majeur de faire glisser la couverture qui est traînée sur la surface à protéger lors de son déploiement et de son retrait ce qui engendre son usure prématurée ainsi qu'un travail supérieur dû aux frottements ainsi générés.

Afin de pallier cet inconvénient, on a développé un nouveau type de dispositif de couverture à tambour, le tambour motorisé étant à présent monté sur un mécanisme de translation longitudinale. Celui-ci déplace le tambour au-dessus de la surface à couvrir ce qui permet littéralement de « poser » la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Le dispositif de couverture comprend également un système de fixation de la couverture à une extrémité transversale de la surface à couvrir de sorte que la translation et la rotation du tambour entraînent le déroulement ou l'enroulement de la couverture au-dessus de la surface à couvrir.

Des exemples de dispositifs automatiques de ce type sont divulgués par exemple dans les documents suivants: W02005/026473, FR 2 900 951, DE 2 257 231, FR 2 893 651, FR 2 789 425, FR 2 743 502, EP 1 719 858, et sur le site www.kimbay.fr. Par ailleurs, une variante complètement manuelle du tambour monté à translation longitudinale est illustrée dans les documents W02007/036625 et US 4,195,370.

Les dispositifs de couverture à tambour mobile illustrés ci-dessus prévoient seulement une fixation d'un bord transversal de la couverture à une extrémité transversale de la surface à couvrir, le bord opposé restant solidaire du tambour. Aucun système de fixation des bords longitudinaux de la couverture n'est prévu. En particulier dans le cas d'une piscine, des personnes s'engageant sur la couverture ne seraient pas retenues par ses bords longitudinaux et pourraient ainsi être précipitées dans l'eau. En outre, le manque d'étanchéité de la couverture sur ses bords longitudinaux peut favoriser l'introduction dans la piscine de petits animaux tels que des souris ou des serpents.

Un autre dispositif automatique avec tambour mobile est divulgué dans le document FR 2 803 769. Ce dispositif comprent toutes les caractésistiques du préambule de la revendication 1. Ledit dispositif prévoit par contre un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Dans le domaine des couvertures de caisses de véhicule, les bords longitudinaux des bâches de recouvrement doivent être solidement fixés sur le périmètre de celles-ci afin de ne pas s'ouvrir lors des déplacements à grande vitesse du véhicule.

De manière analogue, un store - notamment extérieur - d'une serre ou jardin d'hiver, ou une couverture d'un bassin de dessalement doit résister à des rafales de vent parfois importantes.

Le besoin demeure donc quant à un système de recouvrement automatisable d'une surface, réduisant les frottements et permettant de fixer fermement la couverture à la surface sur une grande partie de son périmètre.

### Résumé de l'invention

Un premier but de l'invention est de procurer un dispositif de couverture d'une surface aisé à mettre en oeuvre et permettant une fixation des bords de la couverture à la surface à couvrir sur une grande partie de son périmètre de manière à obtenir en particulier dans le cas d'une piscine une plus grande sécurisation ainsi qu'une plus grande stabilité et une meilleure étanchéité de la couverture.

L'invention est telle que définie dans la revendication principale et comporte notamment un dispositif de couverture d'une surface comprenant :
(a) un tambour monté à rotation apte à enrouler ou dérouler une couverture, ledit tambour étant monté sur un mécanisme de translation longitudinale comprenant des rails constitués chacun d'un profilé ayant une ouverture vers l'extérieur sur une de ses faces et placés de part et d'autre de ladite surface ;
(b) un système de fixation de ladite couverture à une extrémité transversale de la surface à couvrir de sorte que la translation et la rotation du tambour entraînent le déroulement/enroulement de la couverture au-dessus de la surface à couvrir;
(c) un système de verrouillage continu des bords longitudinaux de la couverture dans lesdits rails s'enclenchant au fur et à mesure de son déroulement,
caractérisé en ce que dans ledit système de verrouillage continu:
(i) au moins un desdits rails comprend des ailes fermant partiellement de part et d'autre ladite ouverture ;
(ii) ladite couverture comprend au moins un profilé en saillie du plan défini par celle-ci et s'étendant le long d'au moins un de ses bords longitudinaux, à une certaine distance dudit bord formant ainsi une lèvre;
(iii) des moyens d'engagement sont prévus permettant d'engager ledit profilé dans l'ouverture formée par les ailes du rail de sorte que la couverture soit verrouillée au rail lors de son déroulement.

L'avantage de l'invention est que le dispositif de couverture peut être automatisé, et permet lors du déroulement de la couverture de simultanément la poser (donc sans la faire glisser) et la fixer fermement et de manière continue sur une grande partie de son périmètre.

Suivant un mode de réalisation préféré, le dispositif de couverture convient au recouvrement d'une multitude de surfaces comme par exemple, un bassin rempli ou non d'un liquide tel qu'une piscine, un bassin de rétention, de traitement ou de désalinisation des eaux ; un terrain de sports, tel un terrain de tennis ou de cricket ; une caisse d'un véhicule tel qu'un camion ou une remorque de camion ; une surface vitrée telle une serre, un jardin d'hiver ou une fenêtre de véhicule (train, bus etc.).

Un avantage de ce mode de réalisation est que le dispositif de couverture peut être utilisé dans de multiples applications outdoor du fait de sa bonne aptitude à maintenir la couverture en place si celle-ci est fortement sollicitée par exemple par des intempéries, une dépression ou toute autre surcharge.

Suivant un autre mode de réalisation avantageux, le dispositif de couverture comprend des moyens d'application d'une contrainte en traction transversale à la couverture lors de son déroulement, ladite contrainte étant maintenue lors du verrouillage de la couverture dans lesdits rails. Un avantage de ce mode de réalisation dans le cas d'une piscine est que la couverture posée sous tension présente dans son état déployé une flèche faible permettant de maintenir une distance de sécurité entre le plan d'eau et le centre de la couverture. Cette distance de sécurité permet à des baigneurs piégés sous la couverture de pouvoir respirer librement. Cette distance crée aussi un coussin d'air isolant permettant en particulier dans le cas d'une couverture translucide ou transparente d'engendrer un effet de serre susceptible de réchauffer l'eau de la piscine. On peut obtenir une flèche de l'ordre de 6 à 8 cm sur une largeur de 6 m entre les deux bords transversaux d'une piscine par l'application d'une tension transversale.

En outre, une couverture tendue présente un aspect plus esthétique, facilite le drainage de l'eau accumulée à sa surface et permet donc de maintenir sa surface propre plus longtemps. Enfin, la tension en mettant la couverture dans un plan sensiblement horizontal facilite l'accès des personnes à la couverture ainsi que les travaux d'entretien sur celle-ci (balayage, nettoyage sous pression etc.), car la capacité de la couverture à supporter un poids, par exemple d'une personne, s'en trouve augmentée.

Avantageusement, le dispositif de couverture selon l'invention comprend des moyens d'application d'une contrainte en traction longitudinale à la couverture lors de son déroulement. Les avantages sont analogues à ceux liés à la traction transversale. Ils sont renforcés en cas de combinaison de ces deux tractions.

Le mécanisme de translation longitudinale du dispositif de couverture comprend avantageusement monté sur lesdits rails un système de crémaillère ou un câble tracteur ou une chaîne ; ceux-ci sont avantageusement reliés au tambour par l'intermédiaire d'un chariot de translation.

Alors que le mécanisme de translation longitudinale peut être actionné manuellement, il comprend selon un autre mode de réalisation au moins un moteur afin d'automatiser au moins partiellement le système, ce qui est particulièrement avantageux dans le cas d'une couverture de taille relativement grande. En ce qui concerne les piscines par exemple, la sécurité en dépend car des manipulations pénibles dissuaderaient rapidement les utilisateurs de déployer la couverture à chaque fois que cela s'impose.

Selon un autre mode de réalisation, le dispositif de couverture de l'invention comprend pour chaque rail un système comportant une bande de fermeture de rails qui s'insère dans le rail et obture ainsi son ouverture, au fur et à mesure de l'enroulement de la couverture sur le tambour. Cette bande a pour but d'éviter, par exemple dans le cas d'une piscine découverte, qu'un baigneur ne se blesse au contact avec les rails. De plus, la fermeture des rails par ladite bande lorsque la piscine est découverte assure la propreté des rails.

Par ailleurs, la couverture du dispositif selon l'invention peut comprendre des ouvertures formant trappes pouvant être obturées par exemple par un battant. Ce battant peut être solidarisé à la couverture au moyen de fermetures à glissière actionnables d'un côté ou des deux côtés de la couverture, ou de bandes auto-agrippantes. Cette mesure peut par exemple servir de sortie de secours à des baigneurs piégés sous la couverture déployée.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: est une vue d'ensemble en perspective d'une surface avec tambour en mouvement ;
- Fig.2: est une coupe transversale d'une variante préférée de système de verrouillage de l'invention ;
- Fig.3: est une vue en perspective d'une autre variante préférée selon l'invention ;
- Fig.4: est une vue en perspective d'une autre forme de réalisation du dispositif de l'invention comprenant en outre oeillets et pitons de sécurité ;
- Fig.5: est une vue en perspective d'une forme de réalisation supplémentaire du dispositif selon l'invention comprenant deux courroies flexibles faisant office de crémaillères permettant la translation du tambour.

### Description détaillée de modes de réalisation particuliers

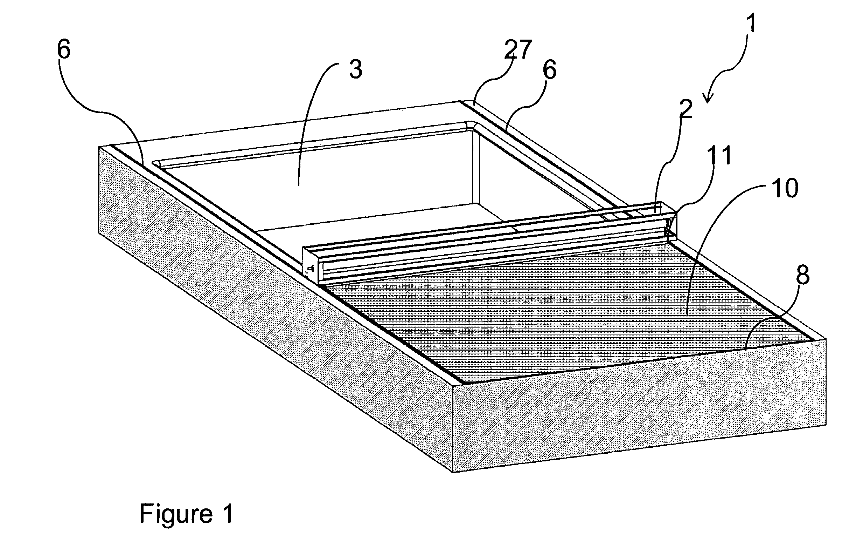

Tel que représenté à la Fig. 1, le dispositif automatique de couverture (1) d'une surface (3) selon l'invention comprend une couverture (10) destinée à protéger ladite surface (3). Le dispositif (1) permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en oeuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend un tambour (2) qui présente une longueur au moins égale à la largeur de la couverture (10), celle-ci devant être de largeur et de longueur suffisantes pour couvrir toute la surface à protéger (3) lorsqu'elle est déployée. Le tambour (2) est monté sur un mécanisme de translation longitudinale comprenant des rails (6) placés de part et d'autre de ladite surface (3). Le tambour (2) a deux sens de rotation : le premier sens de rotation lui permettant de dérouler la couverture (10) pour la déployer et couvrir la surface à protéger (3), et le second sens de rotation lui permettant d'enrouler la couverture (10) afin de la retirer et de donner accès à ladite surface (3).

Le dispositif (1) comprend en outre un système de fixation (8) situé à une extrémité transversale de la surface à couvrir et permettant le déroulement/enroulement de la couverture au-dessus de la surface à couvrir (3) lors de la translation et la rotation du tambour (2). Tout type de système de fixation connu et convenant aux critères de contraintes et de sécurité selon l'application peut être utilisé à cet effet. Par exemple, le système de fixation (8) peut comprendre une pluralité de sangles solidaires de l'extrémité transversale apparente de la couverture (10), lesdites sangles étant par exemple munies de crochets d'ancrage qui se fixent sur la partie transversale du contour délimitant la surface à couvrir (3). De manière alternative, on peut munir l'extrémité à fixer de la couverture d'oeillets qui viennent se fixer au bord transversal de la surface par l'intermédiaire d'une série de pitons, de vis, d'un câble ou tout autre moyen. Ces moyens d'ancrage maintiennent immobilisée l'extrémité transversale apparente de la couverture (10) ce qui permet de générer sur celle-ci une traction longitudinale et de la dérouler le cas échéant sans moteur lorsque le tambour (2) se déplace pour couvrir la surface (3).

La couverture peut être en toute matière convenant à l'application en question : matériaux textiles synthétiques ou naturels, films polymériques, lattes en polymère, en métal ou en bois, etc. Elle peut être transparente, opaque ou translucide et peut former une barrière à des fluides ou au contraire être poreuse, voir même comprendre des mailles telles que dans un filet.

Une tension longitudinale peut-être appliquée à la couverture lors de son déploiement simplement en s'assurant que la vitesse de déroulement de la couverture par la rotation du tambour soit inférieure à la vitesse de translation longitudinale du tambour, soit par l'intermédiaire d'un frein ou d'un ressort dans le système de rotation du tambour, soit par un contrôle motorisé différencié des mouvements de rotation et translation du tambour. Si ces deux vitesses sont synchrones, la couverture sera déployée sans d'autres tensions que celles générées par son poids propre dans le cas de la couverture d'une surface comprenant une cavité telle qu'une piscine.

La couverture peut de plus être munie de moyens de drainage permettant l'évacuation de tout fluide s'étant déposé sur sa surface en facilitant ainsi la manutention.

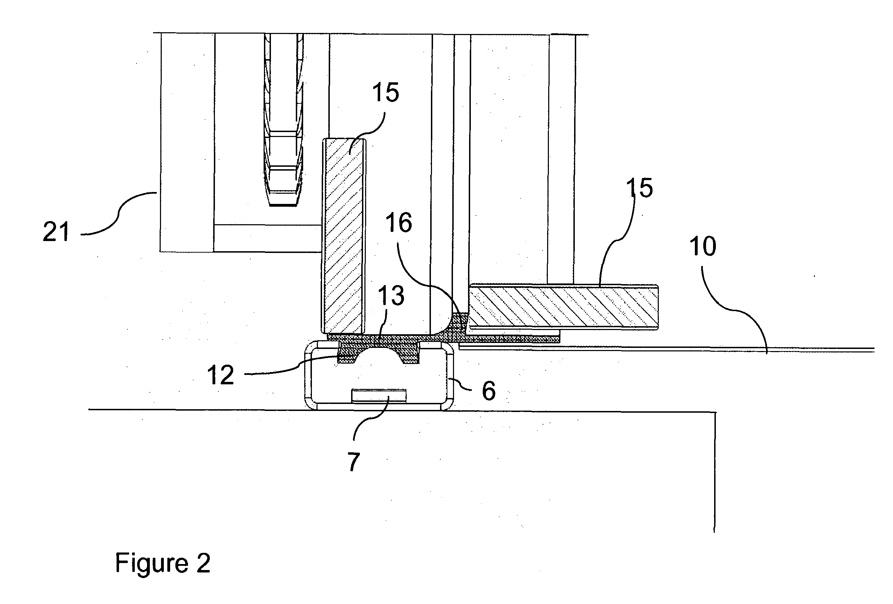

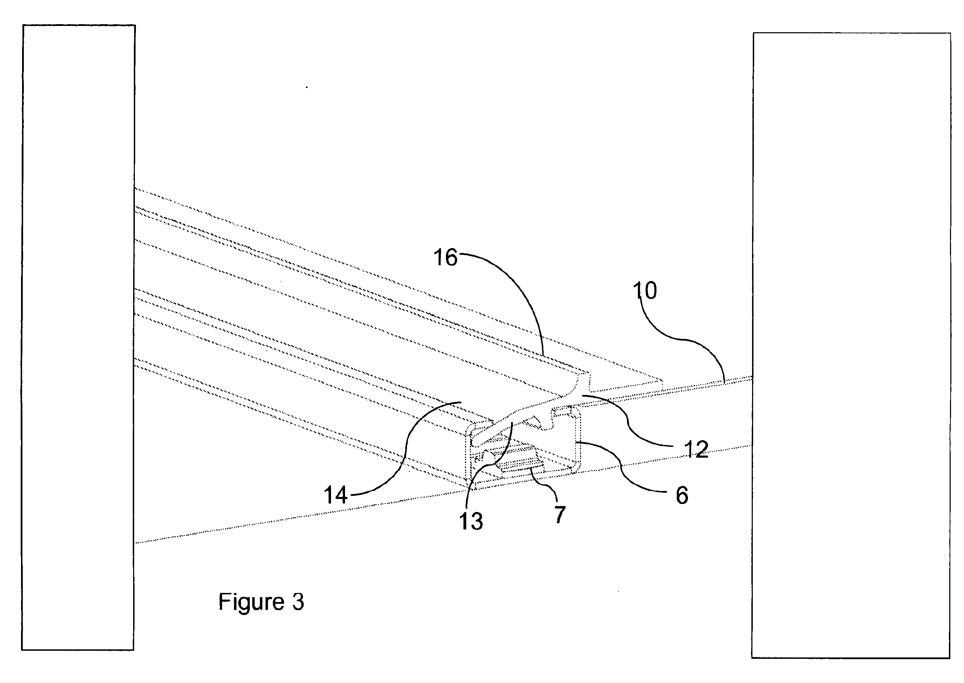

Le dispositif (1) objet de l'invention est remarquable en ce qu'il comprend un système de verrouillage (11) continu des bords longitudinaux de la couverture (10) dans les rails (6) s'enclenchant au fur et à mesure de son déroulement et se déclenchant lors de son enroulement. Un système de verrouillage réversible selon l'invention est représenté à titre d'exemple dans les Fig. 2 et 3 et comprend :
(a) au moins un rail (6) constitué d'un profilé ayant une ouverture (14) vers l'extérieur sur une de ses faces et comprenant des ailes fermant partiellement de part et d'autre ladite ouverture (14) ;
(b) une couverture (10) comprenant au moins un profilé (12), préférablement en forme sensiblement de « I », « L » ou de « T » en saillie du plan défini par la couverture (10) et s'étendant le long d'au moins un de ses bords longitudinaux, à une certaine distance dudit bord formant ainsi une lèvre (13) ;
(c) des moyens d'engagement (15) permettant d'engager ledit profilé (12) dans l'ouverture formée par les ailes du rail (6) et de glisser la lèvre libre (13) de la couverture sous une des ailes de sorte que la couverture (10) soit verrouillée au rail (6).

Ce système de verrouillage permet de glisser le profilé (12) et l'extrémité libre de la lèvre (13) dans l'ouverture (14) du rail (6) et ainsi de coincer et donc de fixer de manière continue dans ledit rail (6) le bord longitudinal correspondant de la couverture (10) et de maintenir par celui-ci la couverture (10) au-dessus de la surface à couvrir (3) même en cas de sollicitations mécaniques très élevées dues par exemple à une dépression ou à la gravitation. Dans le cas des piscines, il confère la sécurité en cas d'accès (autorisé ou non) à la couverture. Selon les matériaux utilisés, la résistance du système de verrouillage est située de préférence dans la plage 5 à 10 kN/m (500 à 1000 kg/m).

Dans le système de verrouillage (11) du dispositif de couverture (1) selon l'invention les moyens (15) permettant d'engager ledit profilé (12) dans le rail (6) comprennent de préférence au moins un galet ou un guide poussant la lèvre (13) sous une aile du rail (6). Ces moyens permettent de réduire la friction sur les bords de la couverture et donc d'exploiter le dispositif de l'invention de façon plus économique par une moindre usure de la lèvre (13) et par une énergie absorbée plus faible.

Dans le système de verrouillage (11) du dispositif de couverture (1) selon l'invention les moyens d'engagement (15) comprennent avantageusement au moins un galet ou un guide tendeur appliquant une contrainte en traction sur la couverture (10) transversalement à la direction du rail (6) lors du verrouillage. Cette variante permet l'application d'une tension transversale sur la couverture (10) en vue de réduire la flèche. Ledit galet s'appuie de préférence sur un bourrelet d'appui (16) s'étendant le long du au moins un des bords longitudinaux comprenant ladite lèvre (13) qui s'engage dans le ou les rails (6).

Dans le système de verrouillage (11) du dispositif de couverture selon l'invention (1) le mécanisme de translation longitudinale comprend avantageusement une crémaillère (7) permettant l'engrènement d'une roue dentée d'entraînement (9) montée de manière solidaire avec lesdits moyens d'engagement (15) et permettant leur translation le long du au moins un rail. La crémaillère et la roue dentée d'entraînement associée assurent ainsi un mouvement translatoire sans glissement. Avantageusement, le dispositif selon l'invention (1) comprend une crémaillère (7) disposée de part et d'autre de la surface à couvrir (3), ce qui favorise la synchronisation du mouvement du mécanisme de translation longitudinale. La crémaillère (7) peut être posée soit au fond du rail (6) afin par exemple de limiter l'encombrement du dispositif de couverture, soit en dehors du rail (6) comme cela est usuel. De manière particulièrement avantageuse, la crémaillère (7) peut présenter la forme d'une courroie flexible venant coiffer une partie importante du périmètre de la roue dentée (9) pour assurer un engrènement particulièrement sûr en regard du glissement. Dans le cas où la couverture (10) est montée sur un tambour (2), les galets ou bourrelets d'appui et la roue dentée mentionnés ci-dessus sont montés de manière solidaire avec le tambour, préférablement au travers d'un chariot de translation (21).

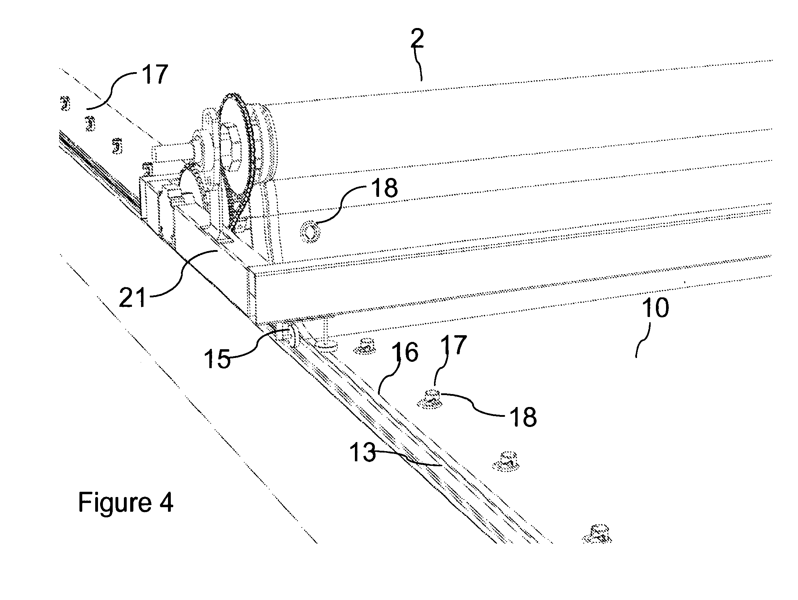

Le dispositif de couverture de l'invention comprend avantageusement parallèlement au système de verrouillage continu (11) un système discret de sécurité Celui-ci, visible à la Fig. 4, comporte par exemple des pitons (17) disposés de part et d'autre de la surface à couvrir (3) entre chacun de ses bords (27) longitudinaux et les rails correspondants (6) du système de verrouillage continu (11). Les pitons (17) viennent s'insérer dans des oeillets correspondants (18) disposés le long des bords longitudinaux de la couverture (3) au fur et à mesure de son déroulement. Cette combinaison de pitons (17) et oeillets (18) procure une sécurité extrême en retenant la couverture (10) en cas de sortie tout à fait accidentelle d'au moins une lèvre (13) de son rail (6).

Dans le dispositif de couverture selon l'invention, les pitons (17) sont avantageusement munis d'une tête d'accrochage dont la forme permet de retenir les oeillets (18) correspondants, telle un harpon ou une bite d'amarrage.

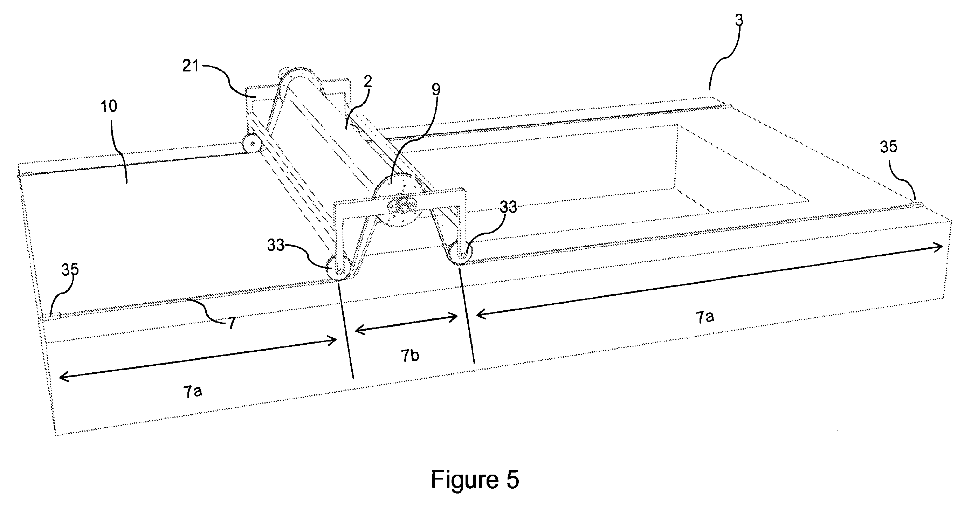

A la Fig. 5 est représentée une forme de réalisation préférée de l'invention dans laquelle ledit chariot de translation (21) comprend :
(a) deux courroies flexibles formant crémaillères (7) fixées uniquement à chacune de leurs extrémités (35) aux quatre coins de la surface (3) à couvrir et disposées le long des deux longueurs du périmètre de la surface (3) à couvrir; et à chacune de ses extrémités:
(b) la roue dentée d'entraînement (9) dont l'axe de rotation est parallèle à celui dudit tambour (2);
(c) au moins deux roulettes (33) reposant sur la surface directement adjacente à la surface (3) à couvrir et permettant la translation longitudinale du chariot (21), et étant montées de part et d'autre de la roue dentée d'entraînement (9), et constituant avec celle-ci un triangle dont elle forme le sommet,
de sorte que les sections (7a) de chaque courroie flexible (7) comprises entre leurs points de fixation (35) et les roulettes (33), soient plaquées sur la longueur du périmètre de la surface à couvrir, et que la section (7b) de chaque courroie comprise entre les au moins deux roulettes (33) vienne coiffer sans glissement la roue dentée d'entraînement (9). L'avantage de cette forme de réalisation est que les courroies flexibles formant crémaillères (7) permettant le déplacement du chariot (21) par l'intermédiaire de ses roues dentées d'entraînement (9), en coiffant celles-ci les enserrent sur un angle suffisamment grand pour garantir une mise en prise particulièrement sûre, c'est-à-dire sans glissement de la courroie (7) sur la périphérie de la roue dentée d'entraînement (9), ce qui favorise le maintien du tambour (2) dans sa trajectoire prédéfinie. Le ou les rails (6) ne sont pas représentés, uniquement par souci de clarté.

## Revendications

1. Dispositif (1) de couverture d'une surface (3) comprenant :
(a) un tambour (2) monté à rotation apte à enrouler ou dérouler une couverture (10), ledit tambour (2) étant monté sur un mécanisme de translation longitudinale comprenant des rails (6) constitués chacun d'un profilé ayant une ouverture (14) vers l'extérieur sur une de ses faces et placés de part et d'autre de ladite surface (3) ;
(b) un système de fixation (8) de ladite couverture (10) à une extrémité transversale de la surface (3) de sorte que la translation et la rotation du tambour (2) entraînent le déroulement/enroulement de la couverture (10) au-dessus de la surface à couvrir (3);
(c) un système de verrouillage (11) continu des bords longitudinaux de la couverture (10) dans l'ouverture (14) desdits rails (6) s'enclenchant au fur et à mesure de son déroulement et se désenclenchant au fur et à mesure de son réenroulement,
**caractérisé en ce que** dans ledit système de verrouillage continu (11) :
(i) au moins un desdits rails (6) comprend des ailes fermant partiellement de part et d'autre ladite ouverture (14) ;
(ii) ladite couverture (10) comprend au moins un profilé (12) en saillie du plan défini par celle-ci et s'étendant le long d'au moins un de ses bords longitudinaux, à une certaine distance dudit bord formant ainsi une lèvre (13) ;
(iii) des moyens d'engagement (15) sont prévus permettant d'engager ledit profilé dans l'ouverture (14) formée par les ailes du rail (6) de sorte que la couverture (10) soit verrouillée au rail (6) lors de son déroulement.

2. Dispositif selon la revendication 1, dans lequel la surface à couvrir (3) est sélectionnée parmi un bassin rempli ou non d'un liquide tel qu'une piscine, un bassin de rétention, de traitement ou de désalinisation des eaux ; un terrain de sports, tel un terrain de tennis ou de cricket ; une caisse de véhicule, une surface vitrée telle une serre, un jardin d'hiver ou une fenêtre de véhicule.

3. Dispositif de couverture selon l'une quelconque des revendications précédentes dans lequel lesdits moyens d'engagement (15) du système de verrouillage continu (11) comprennent des moyens d'application d'une contrainte en traction transversale à la couverture (10) lors de son déroulement, ladite contrainte étant maintenue lors du verrouillage de la couverture (10) dans l'au moins un desdits rails (6).

4. Dispositif de couverture selon l'une quelconque des revendications précédentes comprenant des moyens d'application d'une contrainte en traction longitudinale à la couverture lors de son déroulement.

5. Dispositif de couverture selon l'une quelconque des revendications précédentes dans lequel le mécanisme de translation longitudinale comprend un système de crémaillère (7).

6. Dispositif de couverture selon l'une quelconque des revendications précédentes où ledit mécanisme de translation longitudinale comprend un chariot (21) monté sur l'au moins un desdits rails.

7. Dispositif de couverture selon l'une quelconque des revendications précédentes où le mécanisme de translation longitudinale comprend de plus au moins un moteur.

8. Dispositif de couverture selon l'une quelconque des revendications précédentes, **caractérisé en ce qu'**il comprend un système discret de verrouillage (17,18) parallèle au système de verrouillage continu (11) et permettant de fixer à la surface à couvrir (3) les bords longitudinaux de la couverture (10) au cas où le système de verrouillage continu (11) viendrait à lâcher.

9. Dispositif de couverture selon l'une quelconque des revendications précédentes, **caractérisé en ce qu'**il comprend pour chaque rail (6) un système comportant une bande qui s'insère dans le rail (6) et obture ainsi son ouverture (14), au fur et à mesure de l'enroulement de la couverture (10) sur le tambour (2).

10. Dispositif de couverture selon l'une quelconque des revendications précédentes, dans lequel les moyens d'engagement (15) permettent de plus de glisser la lèvre libre (13) de la couverture (10) sous une des ailes du rail (6) correspondant.

11. Dispositif de couverture selon l'une quelconque des revendications précédentes où les moyens (15) permettant d'engager ledit profilé (12) dans le rail (6) comprennent au moins un galet ou un guide poussant la lèvre (13) sous une aile du rail (6).

12. Dispositif de couverture selon l'une quelconque des revendications 3 à 11 où les moyens d'engagement (15) comprennent au moins un galet ou un guide tendeur appliquant une contrainte en traction sur la couverture (10) transversalement à la direction du rail (6) lors du verrouillage.

13. Dispositif de couverture selon la revendication 12 où la couverture (10) comprend un bourrelet d'appui (16) s'étendant le long du au moins un de ses bords longitudinaux comprenant ladite lèvre (13) qui s'engage dans le ou les rails (6) et sur lequel bourrelet d'appui peut venir s'appuyer ledit galet ou guide tendeur.

14. Dispositif de couverture selon l'une quelconque des revendications 5 à 13 où une crémaillère (7) est posée dans chaque rail (6), permettant ainsi l'engrènement d'une roue dentée d'entraînement (9) montée de manière solidaire avec lesdits moyens d'engagement (15) et permettant leur translation le long de chaque rail (6).

15. Dispositif de couverture selon les revendications 6 et 14, **caractérisé en ce que** ledit chariot (21) comprend :
(a) deux courroies flexibles formant crémaillères (7) fixées uniquement à chacune de leurs extrémités (35) aux quatre coins de la surface (3) à couvrir et disposées le long des deux longueurs du périmètre de la surface (3) à couvrir; et à chacune de ses extrémités:
(b) la roue dentée d'entraînement (9) dont l'axe de rotation est parallèle à celui dudit tambour (2);
(c) au moins deux roulettes (33) reposant sur la surface directement adjacente à la surface (3) à couvrir et permettant la translation longitudinale du chariot (21), et étant montées de part et d'autre de la roue dentée d'entraînement (9), et constituant avec celle-ci un triangle dont elle forme le sommet,
de sorte que les sections (7a) de chaque courroie flexible (7) comprises entre leurs points de fixation (35) et les roulettes (33), soient plaquées sur la longueur du périmètre de la surface à couvrir, et que la section (7b) de chaque courroie comprise entre les au moins deux roulettes (33) vienne coiffer sans glissement la roue dentée d'entraînement (9).

## Claims

1. Device (1) for covering a surface (3) comprising:
(a) a rotatably-mounted drum (2) capable of winding up or unwinding a cover (10), said drum (2) being mounted on a longitudinal-translation mechanism comprising rails (6) each consisting of a section piece having an outward opening (14) on one of its faces and placed on either side of said surface (3) ;
(b) a system (8) for attaching said cover (10) to one transverse end of the surface (3) so that the translation and the rotation of the drum (2) cause the cover (10) to unwind/wind up above the surface to be covered (3);
(c) a system (11) for the continuous locking of the longitudinal edges of the cover (10) in the opening (14) of said rails (6) engaging progressively as it unwinds and disengaging progressively as it winds up again,
**characterized in that**, in said continuous locking system (11):
(i) at least one of said rails (6) comprises flanges partially closing said opening (14) on either side;
(ii) said covering (10) comprises at least one section piece (12) protruding from the plane defined by the latter and extending along at least one of its longitudinal edges, at a certain distance from said edge thus forming a lip (13);
(iii) engagement means (15) are provided making it possible to engage said section piece in the opening (14) formed by the flanges of the rail (6) so that the cover (10) is locked to the rail (6) when it unwinds.

2. Device according to Claim 1, wherein the surface to be covered (3) is selected from a pool that is filled or not filled with a liquid, such as a swimming pool, a basin for the retention, the treatment or the desalination of water; a sports field, such as a tennis court or a cricket field; a vehicle body, a glazed surface such as a greenhouse, a winter garden or a vehicle window.

3. Covering device according to any one of the preceding claims, wherein said engagement means (15) of the continuous locking system (11) comprise means for applying a transverse tensional stress to the cover (10) when it is unwound, said stress being maintained during the locking of the cover (10) into at least one of said rails (6).

4. Covering device according to any one of the preceding claims, comprising means for applying a longitudinal tensional stress to the cover when it is unwound.

5. Covering device according to any one of the preceding claims, wherein the longitudinal translation mechanism comprises a rack system (7).

6. Covering device according to any one of the preceding claims, wherein said longitudinal translation mechanism comprises a carriage (21) mounted on at least one of said rails.

7. Covering device according to any one of the preceding claims, wherein the longitudinal translation mechanism also comprises at least one motor.

8. Covering device according to any one of the preceding claims, **characterized in that** it comprises a discrete locking system (17, 18) parallel to the continuous locking system (11) and making it possible to attach the longitudinal edges of the cover (10) to the surface to be covered (3) in case the continuous locking system (11) should come loose.

9. Covering device according to any one of the preceding claims, **characterized in that** it comprises, for each rail (6), a system comprising a strip which is inserted into the rail (6) and thus closes off its opening (14) progressively as the cover (10) winds up onto the drum (2).

10. Covering device according to any one of the preceding claims, wherein the engagement means (15) also make it possible to slide the free lip (13) off the cover (10) under one of the flanges of the corresponding rail (6).

11. Covering device according to any one of the preceding claims, wherein the means (15) making it possible to engage said section piece (12) in the rail (6) comprise at least one winder or one guide pushing the lip (13) under a flange of the rail (6).

12. Covering device according to any one of Claims 3 to 11, wherein the engagement means (15) comprise at least one winder or one tensioning guide applying a tensioning stress to the cover (10) transversely to the direction of the rail (6) during the locking operation.

13. Covering device according to Claim 12, wherein the cover (10) comprises a contact bead (16) extending along at least one of its longitudinal edges comprising said lip (13) which is engaged in the rail(s) (6) and on which contact bead said winder or tensioning guide can press.

14. Covering device according to any one of Claims 5 to 13, wherein a rack (7) is placed in each rail (6), thus allowing the meshing of a drive gear wheel (9) mounted securely with said engagement means (15) and allowing them to be translated along each rail (6).

15. Covering device according to Claims 6 and 14, **characterized in that** said carriage (21) comprises:
(a) two flexible belts forming racks (7) attached only at each of their ends (35) to the four corners of the surface (3) to be covered and placed along the two peripheral lengths of the surface (3) to be covered; and to each of its ends:
(b) the drive gear wheel (9) the rotation axis of which is parallel with that of said drum (2);
(c) at least two winders (33) resting on the surface directly adjacent to the surface (3) to be covered and allowing the longitudinal translation of the carriage (21), and being mounted on either side of the drive gear wheel (9), and forming with the latter a triangle of which it forms the apex,
so that the sections (7a) of each flexible belt (7) comprised between their attachment points (35) and the winders (33) are pressed onto the length of the periphery of the surface to be covered and that the section (7b) of each belt comprised between the at least two winders (33) covers the drive gear wheel (9) without sliding.

## Patentansprüche

1. Vorrichtung zur Abdeckung (1) einer Oberfläche (3), mit:
a) einer drehbaren, zum Aufrollen oder Abrollen einer Abdeckung (10) ausgebildeten Trommel (2), wobei die Trommel (2) auf einer Einrichtung zur Verschiebung in Längsrichtung angeordnet ist, welche an beiden Seiten der Oberfläche (3) angeordnete Schienen (6) aufweist, die jeweils von einem Hohlprofil gebildet sind, welches auf einer seiner Flächen eine nach außen gerichtete Öffnung (14) aufweist;
b) einem System (8) zur Befestigung der Abdeckung (10) an einem transversalen Ende der Oberfläche (3) derart, dass die Verschiebung und die Rotation der Trommel (2) das Abrollen/Aufrollen der Abdeckung (10) oberhalb der abzudeckenden Oberfläche (3) herbeiführen;
c) einem kontinuierlich entlang der Längskanten der Abdeckung (10) verlaufenden Verriegelungssystem (11), in dem die Öffnung (14) der Schienen (6) beim Abrollen einrastet und von dem sie sich beim Wiederaufrollen löst,
**dadurch gekennzeichnet, dass** bei dem kontinuierlich verlaufenden Verriegelungssystem (11):
(i) mindestens eine der Schienen (6) Flügel aufweist, die die Öffnung (14) beiderseits partiell verschließen;
(ii) die Abdeckung (10) mindestens ein aus der von ihr aufgespannten Ebene abstehendes Profil (12) aufweist, welches sich entlang wenigstens einer seiner Längskanten, in einem bestimmten Abstand zu der Längskante, erstreckt, und auf diese Weise eine Dichtlippe (13) bildet;
(iii) Befestigungsmittel (15) vorgesehen sind, die das Festlegen des Profils in der Öffnung (14), die von den Flügeln der Schiene (6) gebildet wird, ermöglichen derart, dass die Abdeckung (10) an der Schiene (6) gegen ihr Abrollen gesichert ist.

2. Vorrichtung nach Anspruch 1, wobei die abzudeckende Oberfläche (3) ausgewählt wird aus einem leeren oder mit einer Flüssigkeit gefüllten Becken, wie beispielsweise einem Schwimmbad, einem Rückhaltebecken, einem Behandlungsbecken oder einem Entsalzungsbecken für Wasser; einem Sportplatz, wie beispielsweise einem Tennisplatz oder einem Cricketplatz; einer Fahrzeugkarosserie, einer Glasoberfläche wie beispielsweise einem Gewächshaus, einem Wintergarten oder einer Fahrzeugscheibe.

3. Vorrichtung zur Abdeckung nach einem der vorstehenden Ansprüche, wobei die Befestigungsmittel (15) des kontinuierlich verlaufenden Verriegelungssystems (11) Mittel zur Ausübung einer auf die Abdeckung (10), wenn diese abgerollt wird, in Querrichtung wirkenden Zugspannung, aufweisen, wobei die Zugspannung aufrechterhalten wird, wenn die Abdeckung (10) an der mindestens einen Schiene (6) festgelegt wird.

4. Vorrichtung zur Abdeckung nach einem der vorstehenden Ansprüche, wobei sie Mittel zur Ausübung einer auf die Abdeckung, wenn diese abgerollt wird, in Längsrichtung wirkenden Zugspannung aufweist.

5. Vorrichtung zur Abdeckung nach einem der vorstehenden Ansprüche, wobei die Einrichtung zur Verschiebung in Längsrichtung einen Zahnstangenantrieb (7) aufweist.

6. Vorrichtung zur Abdeckung nach einem der vorstehenden Ansprüche, wobei die Einrichtung zur Verschiebung in Längsrichtung einen Schlitten (21) aufweist, welcher auf mindestens einer der Schienen montiert ist.

7. Vorrichtung zur Abdeckung nach einem der vorstehenden Ansprüche, wobei die Einrichtung zur Verschiebung in Längsrichtung zusätzlich wenigstens einen Motor aufweist.

8. Vorrichtung zur Abdeckung nach einem der vorstehenden Ansprüche, **dadurch gekennzeichnet, dass** sie ein diskretes Verriegelungssystem (17, 18), das zum kontinuierlich verlaufenden Verriegelungssystem (11) parallel angeordnet ist, aufweist, mit welchem die Längskanten der Abdeckung (10) an der zu überdeckenden Oberfläche (3) befestigbar sind, für den Fall, dass sich das kontinuierlich verlaufende Verriegelungssystem (11) lösen sollte.

9. Vorrichtung zur Abdeckung nach einem der vorstehenden Ansprüche, **dadurch gekennzeichnet, dass** sie für jede Schiene (6) ein System mit einem Band aufweist, welches in die jeweilige Schiene (6) passt derart, dass es deren Öffnung (14) verschließt, wenn die Abdeckung (10) auf der Trommel (2) aufgerollt wird.

10. Vorrichtung zur Abdeckung nach einem der vorstehenden Ansprüche, wobei die Befestigungsmittel (15) zusätzlich zur Verschiebung der freien Dichtlippe (13) der Abdeckung (10) unter einen der Flügel der entsprechenden Schiene (6) ausgebildet ist.

11. Vorrichtung zur Abdeckung nach einem der vorstehenden Ansprüche, wobei die Befestigungsmittel (15), mit welchen das Profil (12) in der Schiene (6) festlegbar ist, wenigstens eine Rolle oder eine Führung aufweisen, die die Dichtlippe (13) unter einen Flügel der Schiene (6) drückt.

12. Vorrichtung zur Abdeckung nach einem der Ansprüche 3 bis 11, wobei die Befestigungsmittel (15) wenigstens eine Rolle oder eine Spannführung aufweisen, welche beim Verriegeln eine quer zur Längsrichtung der Schienen (6) wirkende Zugspannung auf die Abdeckung (10) ausübt.

13. Vorrichtung zur Abdeckung nach Anspruch 12, wobei die Abdeckung (10) einen sich entlang mindestens einer ihrer Längskanten erstreckenden Dichtflansch (16), einschließlich der Dichtlippe (13), die mit der Schiene oder den Schienen (6) in Eingriff bringbar ist, aufweist, wobei der Dichtflansch (16) zur Abstützung der Rolle oder der Spannführung ausgebildet ist.

14. Vorrichtung zur Abdeckung nach einem der Ansprüche 5 bis 13, wobei eine Zahnstange (7) in jede Schiene (6) eingesetzt ist, die mit einem Antriebszahnrad (9), welches einstückig mit den Befestigungsmitteln (15) ausgebildet ist, in Eingriff bringbar ist, und ihre Verschiebung in Längsrichtung, entlang jeder Schiene (6) ermöglicht.

15. Vorrichtung zur Abdeckung nach einem der Ansprüche 6 bis 14, **dadurch gekennzeichnet, dass** der Schlitten (21) aufweist:
a) zwei flexible Riemen, die Zahnstangen (7) bilden und die einzig über ihre Enden (35), bezüglich der Längsrichtung, an den vier Ecken der abzudeckenden Oberfläche (3) befestigt sind und sich entlang der beiden Längsseiten des Umfangs der abzudeckenden Oberfläche (3) erstrecken; und bei jedem ihrer Enden:
b) ein Antriebszahnrad (9), dessen Drehachse parallel ist zu derjenigen der Trommel (2);
c) wenigstens zwei Räder (33), die auf einer zu der abzudeckenden Oberfläche (3) direkt benachbart angeordneten Oberfläche abgestützt sind und die Verschiebung des Schlittens (21) in Längsrichtung ermöglichen, und auf beiden Seiten des Antriebszahnrads (9) angeordnet sind, und gemeinsam mit diesem ein Dreieck auszeichnen, dessen Spitze durch das Antriebszahnrad (9) gebildet wird,
wobei die Abschnitte (7a) jedes flexiblen Riemens (7), die zwischen ihren jeweiligen Befestigungspunkten (35) und den Rädern (33) eingeschlossen sind, in Längsrichtung des Umfangs der abzudeckenden Oberfläche beschichtet sind, und der Abschnitt (7b) jedes Riemens, der zwischen den wenigstens zwei Rädern (33) eingeschlossen ist, das Antriebszahnrad (9) schlupfhemmend überdeckt.
